# EUROPEAN PATENT APPLICATION

(11) **EP 4 761 182 A1**
(43) Date of publication of application: **17.06.2026**
(21) Application number: 25221781.5
(22) Date of filing: 09.12.2025
(51) Int. Cl.: H04L 9/40, H04L 9/00, H04L 67/104

(54) **SMART CONTRACT IN DISTRIBUTED LEDGER THAT MANAGES ENDPOINT INFORMATION FOR PEER NODES**

(30) Priority: 13.12.2024 FI 20246457
(71) Applicant: Nokia Solutions and Networks Oy, 02610 Espoo (FI)
(72) Inventor: FAISAL, Tooba, Orsay (FR); DELÈGUE, Gérard, Bourg-la-Reine (FR)
(74) Representative: Bryers Intellectual Property Ltd

(57) **Abstract**

Apparatus and method of implementing a registry smart contract on a permissioned distributed ledger (PDL). In an embodiment, an apparatus operates the PDL on a distributed network of peer nodes, and executes a registry smart contract deployed on the PDL, in response to receiving a register request regarding a registering peer node, to identify node information comprising at least endpoint information of the registering peer node, generate a transaction proposal to record the node information of the registering peer node on the PDL, provide the transaction proposal to a group of the peer nodes for approval, and record the node information of the registering peer node as a transaction on the PDL when approval is granted.

## Description

### Technical Field

This disclosure is related to the field of distributed ledger environments, and more particularly, to smart contracts.

### Background

Distributed Ledger Technology (DLT) is a technological infrastructure and protocols that allow simultaneous access, validation, and record updating across a networked database. Unlike traditional databases, distributed ledgers have no central data store or administration functionality. DLT operates on a computer network spread over multiple entities, referred to as nodes or peer nodes. A blockchain is an example of DLT. A blockchain is a decentralized, immutable database comprised of multiple interconnected nodes. These nodes are managed by various participants within the blockchain ecosystem, often representing different organizations. Each node replicates the data, offering a global and unified view of the information stored within the blockchain.

To register data and execute dynamic operations on a distributed ledger, such as a blockchain, smart contracts may be deployed. Smart contracts are specialized programs that serve various purposes, and are executed by the nodes running or hosting the smart contract. One problem is how outside entities (e.g., devices, users, etc.) gain access to a particular smart contract hosted by one or more nodes.

### Summary

Described herein is a management strategy for smart contracts deployed on a distributed ledger. In order for an outside entity to gain access to a smart contract, for example, the outside entity needs to know certain node information about the node or nodes that execute or host the smart contract. For example, an outside entity may need to obtain endpoint information for the node(s), access credentials to access the node(s), etc. In an embodiment, a registry smart contract is deployed on the distributed ledger to manage node information for nodes of a distributed network, such as specific nodes that execute specific smart contracts. One technical benefit is the registry smart contract manages or records endpoint information, access credentials, and/or other node information regarding nodes that host certain smart contracts. Thus, when an outside entity wants to invoke a target smart contract, for example, the registry smart contract may be queried to obtain the node information for the nodes that host the target smart contract.

In an embodiment (also referred to as an aspect), an apparatus comprises at least one processor and at least one memory storing instructions, that when executed by the at least one processor, cause the apparatus at least to perform: operating a permissioned distributed ledger (PDL) on a distributed network of peer nodes, and executing at least one registry smart contract deployed on the permissioned distributed ledger, in response to receiving a register request regarding a registering peer node, to perform: identifying node information comprising at least endpoint information of the registering peer node, generating a transaction proposal to record the node information of the registering peer node on the permissioned distributed ledger, providing the transaction proposal to a group of the peer nodes for approval, and recording the node information of the registering peer node as a transaction on the permissioned distributed ledger when approval is granted.

In an embodiment, a method comprises operating a permissioned distributed ledger on a distributed network of peer nodes, and executing at least one registry smart contract deployed on the permissioned distributed ledger, in response to receiving a register request regarding a registering peer node, to perform: identifying node information comprising at least endpoint information of the registering peer node, generating a transaction proposal to record the node information of the registering peer node on the permissioned distributed ledger, providing the transaction proposal to a group of the peer nodes for approval, and recording the node information of the registering peer node as a transaction on the permissioned distributed ledger when approval is granted.

In an embodiment, an apparatus comprises means for operating a permissioned distributed ledger on a distributed network of peer nodes, and means for executing at least one registry smart contract deployed on the permissioned distributed ledger, in response to receiving a register request regarding a registering peer node, to perform: identifying node information comprising at least endpoint information of the registering peer node, generating a transaction proposal to record the node information of the registering peer node on the permissioned distributed ledger, providing the transaction proposal to a group of the peer nodes for approval, and recording the node information of the registering peer node as a transaction on the permissioned distributed ledger when approval is granted.

Other embodiments may include computer readable media, other systems or apparatus, or other methods or means as described below. Also, one or more embodiments as described above may be combinable as described herein.

The above summary provides a basic understanding of some aspects of the specification. This summary is not an extensive overview of the specification. It is intended to neither identify key or critical elements of the specification nor delineate any scope of the particular embodiments of the specification, or any scope of the claims. Its sole purpose is to present some concepts of the specification in a simplified form as a prelude to the more detailed description that is presented later.

### Description of the Drawings

Some embodiments of the invention are now described, by way of example only, and with reference to the accompanying drawings. The same reference number represents the same element or the same type of element on all drawings.
FIG. 1 is a block diagram of a PDL infrastructure in an illustrative embodiment.
FIG. 2 is a block diagram of a PDL in an illustrative embodiment.
FIG. 3 illustrates an abstract PDL architecture.
FIG. 4 is a block diagram illustrating a PDL architecture in an illustrative embodiment.
FIG. 5 illustrates a smart contract hosted on a plurality of peer nodes in an illustrative embodiment.
FIG. 6 is a block diagram illustrating a PDL platform in an illustrative embodiment.
FIG. 7 is a block diagram of a peer node in an illustrative embodiment.
FIG. 8 is a block diagram illustrating registration of a peer node through a registry smart contract in an illustrative embodiment.
FIG. 9 is a block diagram illustrating an endorsement process in an illustrative embodiment.
FIGS. 10A-10B are block diagrams of node information in an illustrative embodiment.
FIG. 11 is a flow chart illustrating a method of registering peer nodes in an illustrative embodiment.
FIG. 12 is a block diagram illustrating maintenance operations regarding a registry smart contract in an illustrative embodiment.
FIG. 13 is a block diagram illustrating querying of a registry smart contract in an illustrative embodiment.
FIG. 14 is a flow chart illustrating a method of querying a registry smart contract in an illustrative embodiment.
FIG. 15 is a block diagram illustrating events notification in an illustrative embodiment.
FIG. 16 is a flow chart illustrating a method of providing event notifications in an illustrative embodiment.
FIG. 17 is a flow chart illustrating a method of auditing node information in an illustrative embodiment.

### Description of Embodiments

The figures and the following description illustrate specific exemplary embodiments. It will thus be appreciated that those skilled in the art will be able to devise various arrangements that, although not explicitly described or shown herein, embody the principles of the embodiments and are included within the scope of the embodiments. Furthermore, any examples described herein are intended to aid in understanding the principles of the embodiments, and are to be construed as being without limitation to such specifically recited examples and conditions. As a result, the inventive concept(s) is not limited to the specific embodiments or examples described below, but by the claims and their equivalents.

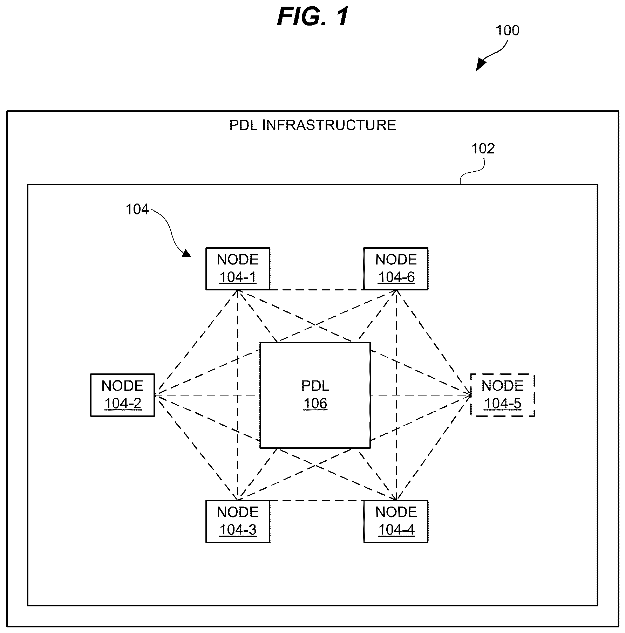

FIG. 1 is a block diagram of a PDL infrastructure 100 in an illustrative embodiment. PDL infrastructure 100 comprises a distributed network 102 (also referred to as a peer-to-peer (P2P) network) of peer nodes 104 (i.e., node 104-1 through 104-6), and a Permissioned Distributed Ledger (PDL) 106. A peer node 104 (also referred to as a PDL node) is a computational device (real or virtual) configured to perform transactions on the PDL 106, such as by running an application or software. A single entity, organization, or party may manage all of the peer nodes 104 of the distributed network 102, or multiple, different entities may manage certain peer nodes 104. A PDL 106 is a distributed ledger that maintains access control to allow certain actions to be performed only by certain identifiable participants. A PDL 106 may store a variety of data as a consensus-based repository of replicated, shared, and synchronized digital records distributed across multiple nodes, without depending on any central administrator. A PDL 106 is maintained by the network of peer nodes 104 that each store, validate, and update the ledger (e.g., simultaneously). Each of the peer nodes 104 stores a copy of the PDL 106 and independently processes new update transactions (i.e., validates information stored in the PDL 106 and helps reach a consensus about the accuracy of the information), which offers a global and unified view of the information stored within the PDL 106. To ensure consensus, the peer nodes 104 employ a consensus algorithm, which is a procedure through which peer nodes 104 reach a common agreement about the present state of the PDL 106. A PDL 106 is therefore a distributed database that is shared and synchronized across multiple peer nodes 104. The PDL 106 is typically used through three main interactions: 1) validate (content through a consensus protocol), 2) record (content onto the ledger), and 3) read (the stored content from the ledger). Although one PDL 106 is shown in FIG. 1, it is understood that the PDL infrastructure 100 may include multiple PDLs. One technical benefit is the distributed nature of a PDL 106 ensures that no central authority can alter content, thus making this technology useful in the context of non-trusted parties interacting with each other.

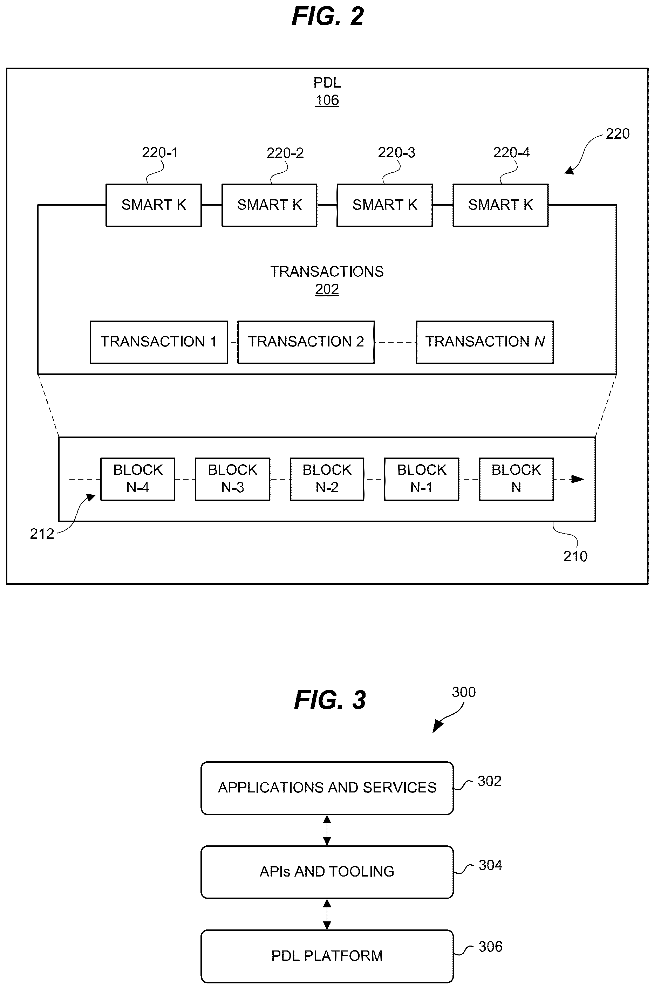

FIG. 2 is a block diagram of a PDL 106 in an illustrative embodiment. A PDL 106 records transactions 202 (i.e., transaction 1, transaction 2, ..., transaction n) that are cryptographically linked. In an embodiment, PDL 106 may store the transactions 202 as digital records in a blockchain 210, although other DLT implementations are considered herein. Blocks 212 in a blockchain 210 are digital structures or records that store or contain data about transactions 202. When a transaction 202 (or group of transactions) occurs, the details of the transaction(s) 202 are packaged into a block 212. The block 212 contains the transaction data and also a timestamp marking when the transaction(s) 202 occurred. The minimal and maximal size of a block 212 varies by PDL type, and the data of a block 212 may or may not be encrypted. When a block 212 is generated, a hash is generated from the sum of its contents (e.g., using SHA256 or similar algorithms). The hash may be used to verify the integrity of the block 212 by repeating the hash. If the hash produces the same result, then the block 212 may be considered untampered. If the hash produces a different result, then the block 212 may have been tampered with and may not contain the same information that was originally stored. Blocks 212 are chained to each other by including the hash of one block 212 as part of the data of the next block 212. This creates a link and dependency between consecutive blocks 212 in the blockchain 210. The information or content stored in blocks 212 may be accessed and read by peer nodes 104 that have access to the blockchain 210.

A PDL 106 may also include one or more smart contracts 220 (e.g., smart contracts 220-1 thru 220-4). A smart contract (K) is executable code or computer program stored or deployed on a PDL 106 that is automatically executed when one or more predetermined terms, triggers, and/or conditions are met. The outcome of any execution of the program is recorded on the PDL 106 as a transaction 202. One purpose of a smart contract 220 is to keep certain code or software in a PDL 106 that executes on certain execution requests. A smart contract 220 may therefore take programmatic action on stored or submitted data for a PDL 106. In general, a smart contract 220 stores or contains identifiers/variables, and function definitions or logic functions calls specifying the set of actions allowed for the smart contract 220. Properties of smart contracts 220 depend on the properties of the underlying PDL 106 and some properties due to their requirements, such as immutability (i.e., once accepted through consensus, cannot be changed), availability (i.e., smart contract function can be invoked and its fields (i.e., variables) can be read by an entity as long as the entity has the appropriate privileges), transparency (i.e., any entity, with the appropriate privileges, may inspect smart contract code and current values), self-execution (i.e., any execution of a smart contract is performed by the peer nodes 104 not by the user invoking the smart contract nor by the smart contract creator), and reusability (i.e., smart contracts are coded once and executed multiple times depending on PDL governance).

FIG. 3 illustrates an abstract PDL architecture 300. The PDL architecture 300 includes an applications and services layer 302 that represents the actual customer/consumer/user facing application. The user may be an individual accessing the PDL platform through a portal or an application, or another platform/device accessing the PDL platform through an Application Programming Interface (API) or other means of electronic transactions. Depending on PDL type, an application (which may be platform or operating system specific (e.g., mobile phone, desktop computer, Internet of Things (IoT) device)) may interact with a PDL 106 through smart contracts 220. Applications would require exchange of information with the PDL platform itself through a southbound interface.

APIs and tooling layer 304 allows interaction between the applications/services and the PDLs 106. The APIs and tooling layer 304 allows abstraction of the PDL platform and application layers in a manner that may allow applications to operate on more than one PDL type and vice-versa. This layer consists of consoles, dashboards, and development environments made available to developers, institutional users, auditors, and regulators.

The PDL platform layer 306 contains the peer nodes 104 as well as smart contracts 220, management and governance tools, and other software elements that are embedded into code running on the peer nodes 104. The PDL platform may use any of a multitude of PDL types available and may use governance and management tools that are compatible/interoperable with the PDL type.

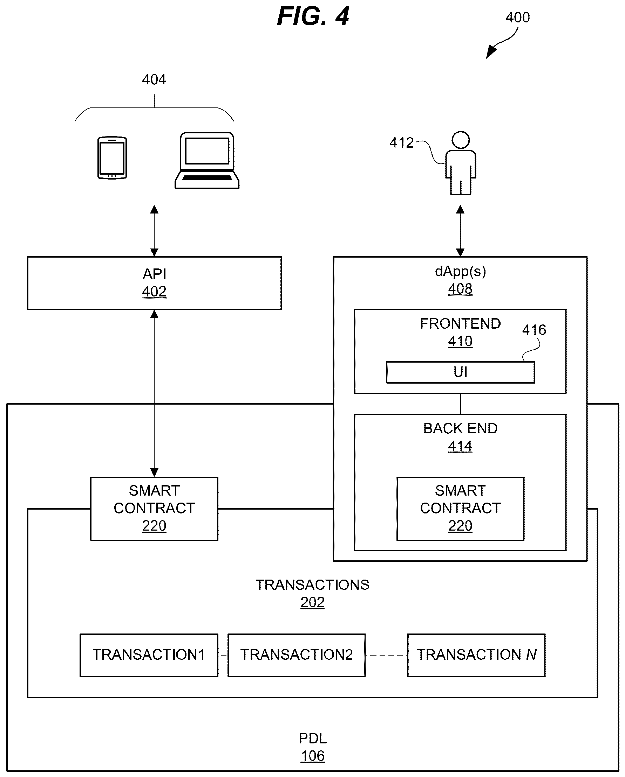

FIG. 4 is a block diagram illustrating a PDL architecture 400 in an illustrative embodiment. In an embodiment, an API 402 may be defined or specified to access a smart contract 220 and/or PDL 106. Thus, external devices 404 (e.g., running applications) that are not part of the PDL platform itself, may access a smart contract 220 in a PDL platform through the API 402. In an embodiment, a decentralized or distributed application 408 (dApp) may be defined or specified to access a smart contract 220 and/or PDL 106. A dApp 408 is an open-source software application that operates on a distributed network 102. A dApp 408 operates autonomously without a centralized entity in control. The frontend 410 of the dApp 408 provides a user interface 416 (UI) to interact with a user 412, and the backend 414 of the dApp 408 comprises one or more smart contracts 220 deployed on PDL 106.

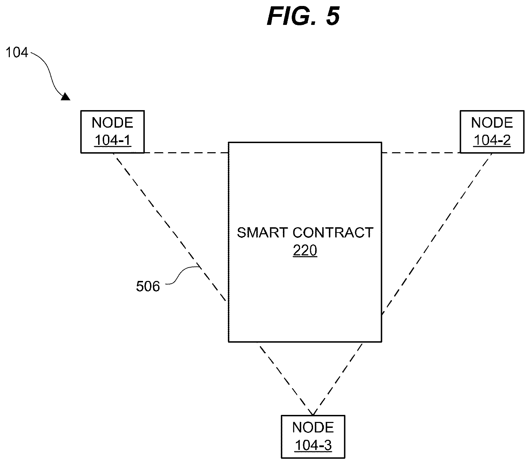

FIG. 5 illustrates a smart contract 220 hosted on a plurality of peer nodes 104 in an illustrative embodiment. A smart contract 220 of a PDL 106 is stored/executed/hosted by one or more peer nodes 104 (e.g., node 104-1, 104-2, and 104-3). In a permission-less distributed ledger, a smart contract 220 would be stored/executed by each of the peer nodes of the network. In a permissioned distributed ledger (PDL), such as Hyperledger Fabric, smart contracts 220 are stored/executed/hosted only on the peer nodes 104 of the distributed network 102 that are authorized. The authorized peer nodes 104 are part of a channel 506 (e.g., an abstract point-to-point link between peer nodes 104) established through communication between the peer nodes 104.

When a device/user wants to interact with the PDL 106 (e.g., submit data to or read data from) through a smart contract 220, they need node information (e.g., at least endpoint information) about one or more of the peer nodes 104 running or hosting the smart contract 220. For example, if a device/user wants to invoke the smart contract 220 in FIG. 5, they need endpoint information about one or more of the peer nodes 104-1, 104-2, 104-3 that host the smart contract 220 in order to communicate with at least one of the peer nodes 104-1, 104-2, 104-3. Moreover, they may need access credentials to access the endpoints of the peer node(s) 104 and/or other information.

In embodiments described herein, peer nodes 104 are able to dynamically register their node information on the PDL 106 (e.g., blockchain 210). This enables devices/users, when invoking a smart contract 220, to query the PDL 106 and obtain the most recent and accurate information about the peer nodes 104 hosting that smart contract 220. The solution leverages one or more dedicated or specialized smart contracts 220 on the PDL 106, referred to as a "registry smart contract".

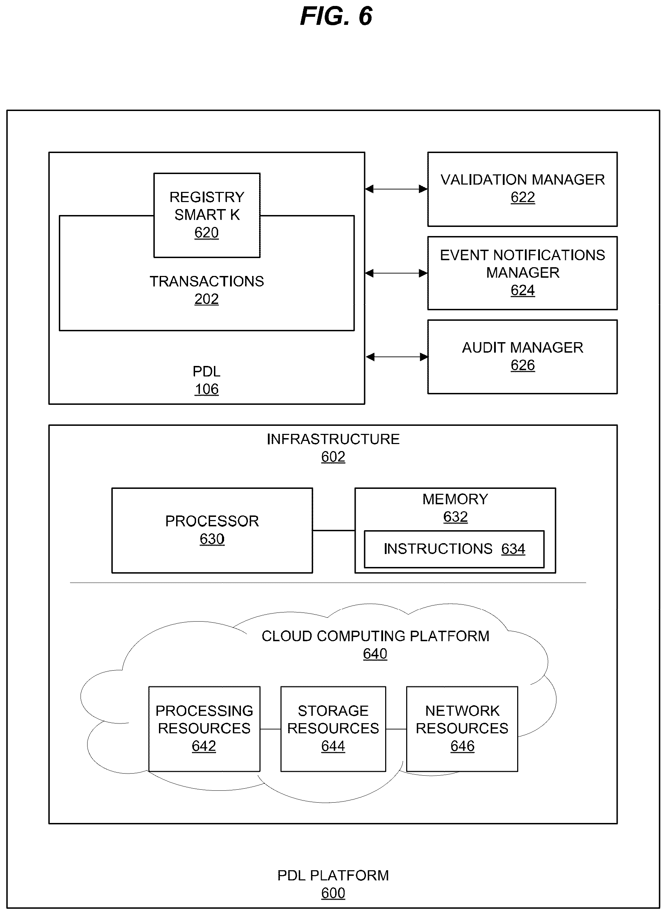

FIG. 6 is a block diagram illustrating a PDL platform 600 in an illustrative embodiment. PDL platform 600 comprises an infrastructure 602 that enables a PDL 106 (or multiple PDLs). The infrastructure 602 may comprise at least one processor 630 that executes instructions 634 stored in at least one memory 632. A processor 630 comprises an integrated hardware circuit configured to execute instructions 634 to provide the functions of a PDL. Processor 630 may comprise a set of one or more processors or may comprise a multi-processor core, depending on the particular implementation. Memory 632 is a non-transitory computer readable medium for data, instructions, applications, etc., and is accessible by processor 630. Memory 632 is a hardware storage device capable of storing information on a temporary basis and/or a permanent basis. Memory 632 may comprise a random-access memory, or any other volatile or non-volatile storage device.

The infrastructure 602 may comprise a cloud computing platform 640 (e.g., Amazon Web Services (AWS)) or another type of processing platform. Cloud resources may be provisioned on cloud computing platform 640, such as processing resources 642 (e.g., physical or hardware processors, a server, a virtual server or virtual machine (VM), a virtual central processing unit (vCPU), etc.), storage resources 644 (e.g., physical or hardware storage, virtual storage, etc.), and/or networking resources 646, although other resources are considered herein.

PDL platform 600 may further comprise a registry smart contract 620 (or multiple registry smart contracts). Registry smart contract 620 is a dedicated or specialized smart contract deployed on PDL 106 to manage node information for peer nodes 104. More particularly, registry smart contract 620 is configured to manage node information (e.g., endpoint information) regarding specific peer nodes 104 that execute specific smart contracts 220. One assumption is that entities, organizations, parties, etc., of the PDL 106 agree on the terms and conditions for the registry smart contract 620, the code for the registry smart contract 620, etc. When the registry smart contract 620 is agreed upon and coded, the registry smart contract 620 is deployed on the PDL 106. The code of the registry smart contract 620 is included in a transaction 202 (or transactions) of the PDL 106, and is live on the PDL 106 once the transaction(s) 202 is approved or confirmed. The registry smart contract 620 is configured to monitor for certain conditions or triggers, and automatically execute to perform one or more actions. As described herein, the registry smart contract 620 may trigger on receiving a register request from a registering peer node (i.e., a new peer node or an existing peer node) to acquire node information for the registering peer node. In response to this trigger, the registry smart contract 620 may be configured to record the node information on the PDL 106. Devices/users may interact with the registry smart contract 620 to retrieve node information regarding one or more peer nodes 104. The registry smart contract 620 may trigger on receiving a node information request from a requestor. In response to this trigger, the registry smart contract 620 may be configured to extract details from the PDL 106 about various peer nodes 104, including their endpoint information. One technical benefit is devices/users may query the registry smart contract 620 to acquire or contribute the necessary information, ensuring seamless communication within the PDL ecosystem.

PDL platform 600 may further comprise a validation module 622, an event notifications manager 624, and an audit manager 626. The validation module 622 is configured to validate or approve transactions 202 on PDL 106. The event notifications manager 624 is configured to manage event notifications to inform interested parties about changes in the node information, such as the addition, modification, or removal of node information for peer nodes 104 on the PDL 106. Audit manager 626 is configured to monitor the accuracy and/or performance of the registry smart contract 620. The validation module 622, event notifications manager 624, and audit manager 626 may be implemented as code executed on the PDL 106 or group of peer nodes 104, as part of the registry smart contract 620, as one or more other smart contracts 220, etc.

It is to be appreciated that the particular arrangement of components shown in FIG. 6 is an example, and numerous alternative configurations may be used in other embodiments. For example, PDL platform 600 may be configured to incorporate additional or alternative components.

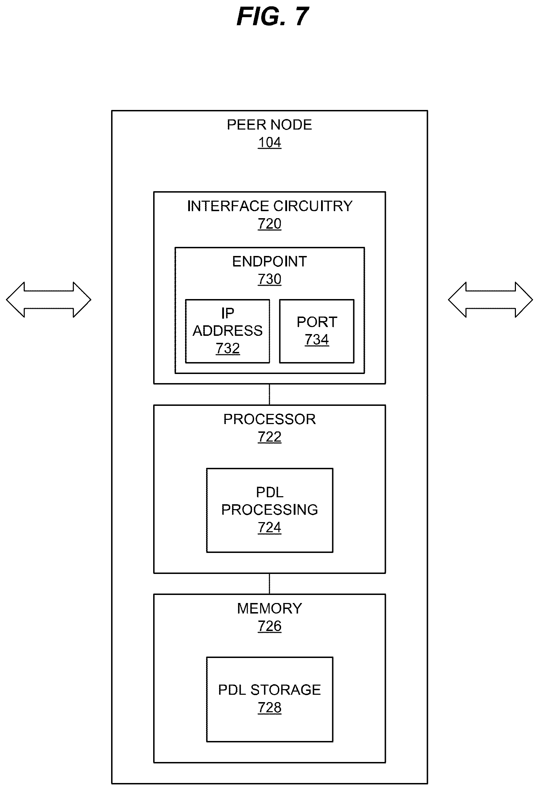

FIG. 7 is a block diagram of a peer node 104 in an illustrative embodiment. It is to be appreciated that peer node 104 is configured to interact with other peer nodes 104 of a distributed network 102 to maintain a PDL 106 that comprises one or more smart contracts 220. Peer node 104 comprises at least one processor 722 coupled to at least one memory 726 and interface circuitry 720. The processor 722 of peer node 104 includes a PDL processing module 724 that may be implemented at least in part in the form of software executed by the processor 722. The PDL processing module 724 performs management of a PDL 106 (e.g., including one or more smart contracts 220) described in conjunction with subsequent figures and otherwise herein. The memory 726 includes a PDL storage module 728 that stores data generated or otherwise used during PDL operations.

The processor 722 of peer node 104 may comprise, for example, microprocessors, application-specific integrated circuits (ASICs), field programmable gate arrays (FPGAs), digital signal processors (DSPs) or other types of processing devices or integrated circuits, as well as portions or combinations of such elements. Such integrated circuit devices, as well as portions or combinations thereof, are examples of "circuitry" as that term is used herein. A wide variety of other arrangements of hardware and associated software or firmware may be used in implementing the illustrative embodiments.

The memory 726 of peer node 104 may be used to store one or more software programs that are executed by the processor 722 to implement at least a portion of the functionality described herein. For example, PDL operations and other functionality as described in conjunction with subsequent figures and otherwise herein may be implemented in a straightforward manner using software code executed by processor 722.

A memory 726 may therefore be viewed as an example of what is more generally referred to herein as a computer program product or still more generally as a processor-readable storage medium that has executable program code embodied therein. Other examples of processor-readable storage media may include disks or other types of magnetic or optical media, in any combination. Illustrative embodiments can include articles of manufacture comprising such computer program products or other processor-readable storage media.

The memory 726 may more particularly comprise, for example, an electronic random-access memory (RAM), such as static RAM (SRAM), dynamic RAM (DRAM), or other types of volatile or non-volatile electronic memory. The latter may include, for example, non-volatile memories such as flash memory, magnetic RAM (MRAM), phase-change RAM (PC-RAM) or ferroelectric RAM (FRAM). The term "memory" as used herein is intended to be broadly construed, and may additionally or alternatively encompass, for example, a read-only memory (ROM), a disk-based memory, or other type of storage device, as well as portions or combinations of such devices.

Interface circuitry 720 of peer node 104 illustratively comprises transceivers or other communication hardware or firmware, APIs, etc., that allows the associated system elements to communicate with one another in the manner described herein. Interface circuitry 720 comprises an endpoint 730, which serves as an entry point and/or exit point for data communications with peer nodes 104, external devices, applications, etc. For example, an endpoint 730 of a peer node 104 may comprise an Internet Protocol (IP) address 732 and a port number 734.

It is to be appreciated that the particular arrangement of components shown in FIG. 7 is an example, and numerous alternative configurations may be used in other embodiments. For example, peer node 104 may be configured to incorporate additional or alternative components.

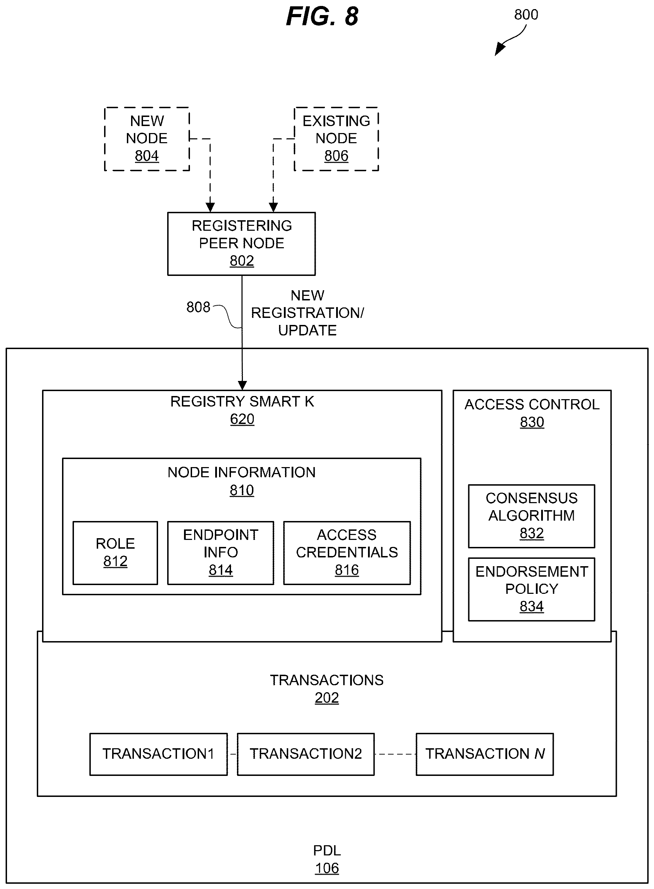

FIG. 8 is a block diagram illustrating registration 800 of a peer node 104 through the registry smart contract 620 in an illustrative embodiment. The registry smart contract 620 may provide a registry function to allow registration of a peer node 104 on the PDL 106. For example, a peer node registering with the PDL 106 through the registry smart contract 620 may be referred to as a registering peer node 802. In an example, the registering peer node 802 may comprise a new peer node 804 that is newly-registering with the PDL 106. Thus, the new peer node 804 may access the registry smart contract 620 to register its role, node information, access credentials, etc., on the PDL 106. In another example, the registering peer node 802 may comprise an existing peer node 806 that is already registered with the PDL 106 and wants to update its registration on the PDL 106. As roles of peer nodes 104 may change, an existing peer node 806 may access the registry smart contract 620 to update its role, node information, access credentials, etc., on the PDL 106.

When in operation, the registry smart contract 620 executes (e.g., automatically) in response to receiving a register request 808 regarding the registering peer node 802. As described above, the register request 808 may comprises a request to register a new peer node 804 or a request to update the registration of an existing peer node 806. The registry smart contract 620 may receive the register request 808 from the registering peer node 802, or from a requesting entity (e.g., owner of the registering peer node) through an API 402 of the registry smart contract 620, through a dApp 408, etc. For example, an API 402 of the registry smart contract 620 may provide functions to register, update, and/or query the registry smart contract 620, manage user identities and permissions, etc. Likewise, a dApp 408 may provide functions to register, update, and/or query the registry smart contract 620, manage user identities and permissions, etc. When the registering peer node 802, for example, interacts with the registry smart contract 620 using the API 402 or dApp 408, an identity context is established. The identity context represents the currently-active node identity and is used to sign transactions and authenticate node actions on the network. The API 402 or dApp 408 manages the identity context and ensures that it is properly set and maintained throughout the interaction with the PDL 106.

When registry smart contract 620 executes, the registry smart contract 620 identifies node information 810 of the registering peer node 802. The node information 810 may comprise an indication of a role 812 of the registering peer node 802 (e.g., admin, registrar, user, etc.), endpoint information 814 of the registering peer node 802, access credentials 816 of the registering peer node 802, etc. For example, the registry smart contract 620 may parse the register request 808 to identify the node information 810 of the registering peer node 802. In another example, the registry smart contract 620 may interact with or query the registering peer node 802 or a requesting entity to obtain or acquire the node information 810 of the registering peer node 802.

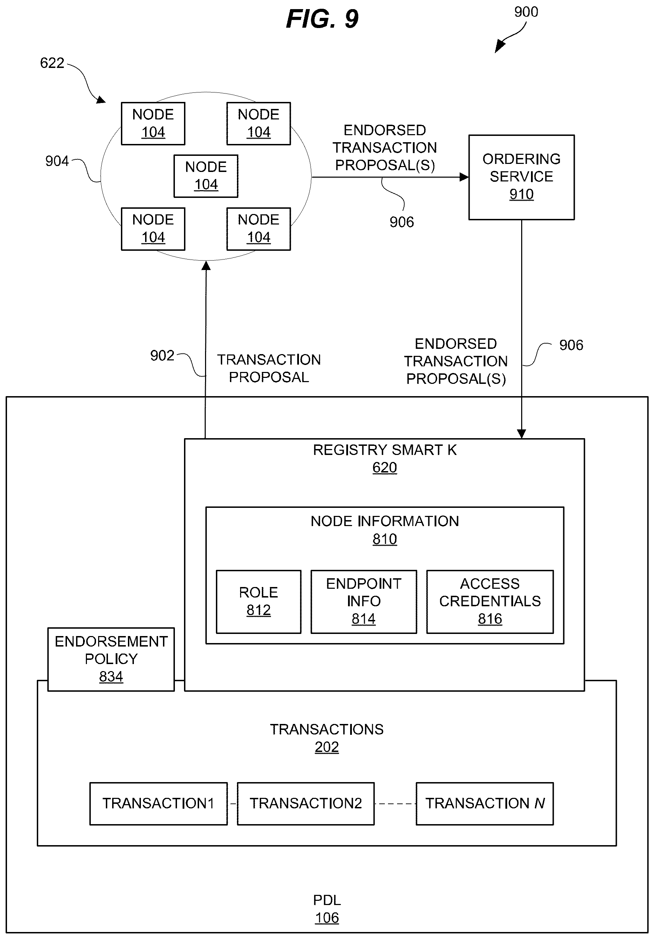

Before the node information 810 of the registering peer node 802 can be recorded on the PDL 106, approval needs to be obtained, such as through validation module 622. For example, access control 830 to the PDL 106 requires approval (e.g., from a group of peer nodes 104) before transactions 202 may be recorded on the PDL 106. Access control 830 may be based on a consensus algorithm 832, an endorsement policy 834, etc. FIG. 9 is a block diagram illustrating an endorsement process 900 in an illustrative embodiment. According to an endorsement policy 834 defined for the registry smart contract 620 or the PDL 106, the registry smart contract 620 seeks approval for a transaction 202 by generating a transaction proposal 902 to record the node information 810 of the registering peer node 802 on the PDL 106. The registry smart contract 620 sends or provides the transaction proposal 902 to validation module 622 (i.e., a group 904 (e.g., one or more) of peer nodes 104) for approval (i.e., to achieve a consensus/endorsement). When receiving a transaction proposal 902 from the registry smart contract 620, the validation module 622 verifies the validity of the node information 810. For example, the group 904 of peer nodes 104 may verify that the endpoint information 814 and/or access credentials 816 are accurate, the actor submitting the register request 808 has the necessary permissions to perform the registration or update, etc. The endorsement policy 834 defines the rules for validating transactions within the group 904. The endorsement policy 834 is used to specify the required signatures from specific organizations or roles to approve a transaction. For example, an endorsement policy 834 may require signatures from two different organizations or a combination of specific roles (e.g., admin and registrar) to register or update node information 810. This ensures that only authorized entities can specify or make changes to node information 810, for example.

In an embodiment, the endorsement policy 834 may comprise attribute-based access control (ABAC) or role-based access control (RBAC). The ABAC mechanism is used to grant or deny access to specific functions (e.g., register, update, or query) based on the attributes associated with the user's identity. For example, an ABAC policy may allow only users with the "admin" attribute to register or update node information 810, while users with the "user" attribute can only query the node information 810. The RBAC mechanism controls access to resources based on the roles assigned to users within an organization. RBAC is used to grant or deny access to specific functions based on the roles associated with the user's identity. For example, a user with the "admin" role may have the ability to register or update node information 810, while a user with the "user" role can only query the node information 810. Roles can be assigned and managed by the organization's administrators.

When the transaction proposal 902 is successfully validated, the group 904 of peer nodes 104 adds an endorsement signature to the transaction proposal 902, and provides an endorsed transaction proposal 906 to an ordering service 910. The ordering service 910 receives the endorsed transaction proposal 906, and delivers endorsed transaction proposal 906 to the committing peer nodes 104 in the network.

The registry smart contract 620 receives the endorsed transaction proposal 906 from the ordering service 910, and validates the endorsed transaction proposal 906, ensuring that the endorsement policy is satisfied. The registry smart contract 620 then records the node information 810 of the registering peer node 802, as approved in the endorsed transaction proposal 906, as a transaction 202 on the PDL 106. One technical benefit is this endorsement process 900 ensures the integrity, security, and consistency of the node information 810 stored on PDL 106. Although an endorsement process 900 is illustrated in FIG. 9, other types of approval processes may be used to record transactions 202 on PDL 106, such as based on the consensus algorithm 832.

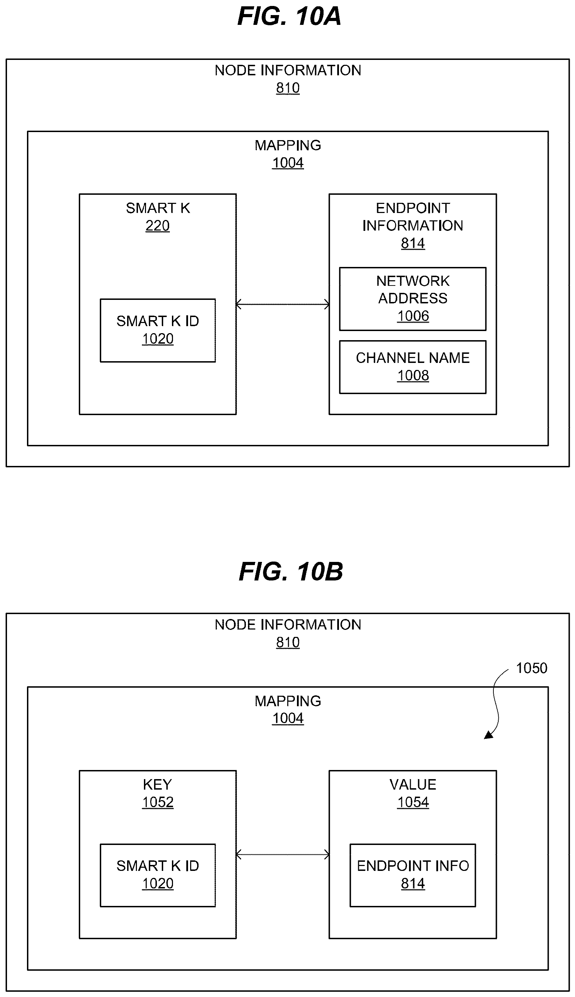

In an embodiment, the node information 810 may comprise a mapping between smart contracts 220 and endpoint information 814 (e.g., for a registering peer node 802). FIGS. 10A-10B are block diagrams of node information 810 managed by the registry smart contract 620 in an illustrative embodiment. In FIG. 10A, the node information 810 may comprise a mapping 1004 (also referred to as a node mapping, a smart contract to node mapping, etc.), which maps a smart contract 220 (or multiple smart contracts 220) to a peer node 104 (or nodes) that hosts/runs/executes the smart contract 220. As illustrated in FIG. 10A, the node information 810 may comprise a mapping 1004 of a smart contract 220 to endpoint information 814 for a peer node 104 hosting the smart contract 220. In this embodiment, the smart contract 220 may be identifiable by a smart contract identifier (ID) 1020. The endpoint information 814 may include a network address 1006 (e.g., IP address 732 and port number 734) of the peer node 104, a channel identifier or channel name 1008 of the channel 506 on which the smart contract 220 is deployed, etc. In FIG. 10B, the mapping 1004 may be represented as a key-value data structure 1050, where the key 1052 is a unique identifier for a smart contract 220, and the value 1054 is an object containing the endpoint information 814. The key 1052 may comprise the smart contract identifier 1020 or may comprise a combination of the smart contract identifier 1020 along with one or more of a version of the smart contract 220, a node owner identifier, a node identifier, etc.

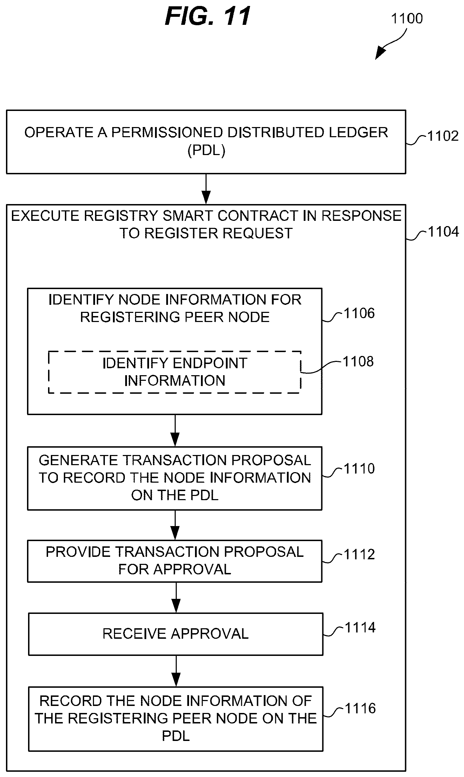

FIG. 11 is a flow chart illustrating a method 1100 of registering peer nodes 104 in an illustrative embodiment. The steps of method 1100 will be described with reference to a PDL platform 600 (e.g., a peer node 104 operating a PDL 106), but those skilled in the art will appreciate that method 1100 may be performed on other systems or platforms. Also, the steps of the flow charts described herein are not all inclusive and may include other steps not shown, and the steps may be performed in an alternative order.

The PDL platform 600 operates a PDL 106 (step 1102), such as illustrated in FIG. 6. The PDL platform 600 executes a registry smart contract 620 deployed on the PDL 106 in response to a trigger or trigging condition (step 1104). In this embodiment, the registry smart contract 620 executes (e.g., automatically) in response to receiving a register request 808 regarding a registering peer node 802 (see FIG. 8). When the registry smart contract 620 executes, the registry smart contract 620 identifies node information 810 of the registering peer node 802 (step 1106). More particularly, the registry smart contract 620 identifies at least endpoint information 814 of the registering peer node 802 (optional step 1108), and may also identify a role 812 of the registering peer node 802, access credentials 816 of the registering peer node 802, etc. The registry smart contract 620 generates a transaction proposal 902 to record the node information 810 of the registering peer node 802 on the PDL 106 (step 1110). The registry smart contract 620 sends or provides the transaction proposal 902 to a group 904 (e.g., one or more) of peer nodes 104 for approval (step 1112), such as according to a consensus algorithm 832, an endorsement policy 834, etc.

The registry smart contract 620 receives approval for the transaction proposal 902 (step 1114), such as an endorsed transaction proposal 906 from the ordering service 910. When approval is granted, the registry smart contract 620 records the node information 810 of the registering peer node 802 as a transaction 202 on the PDL 106 (step 1116). One technical benefit is the registry smart contract 620 is able to record node information 810 for peer nodes 104 on PDL 106, which makes the node information 810 available for subsequent read operations. Thus, when an outside entity wants to invoke a smart contract 220, for example, the registry smart contract 620 may be queried to obtain the accurate and valid endpoint information 814 for the peer node(s) 104 that host that smart contract 220.

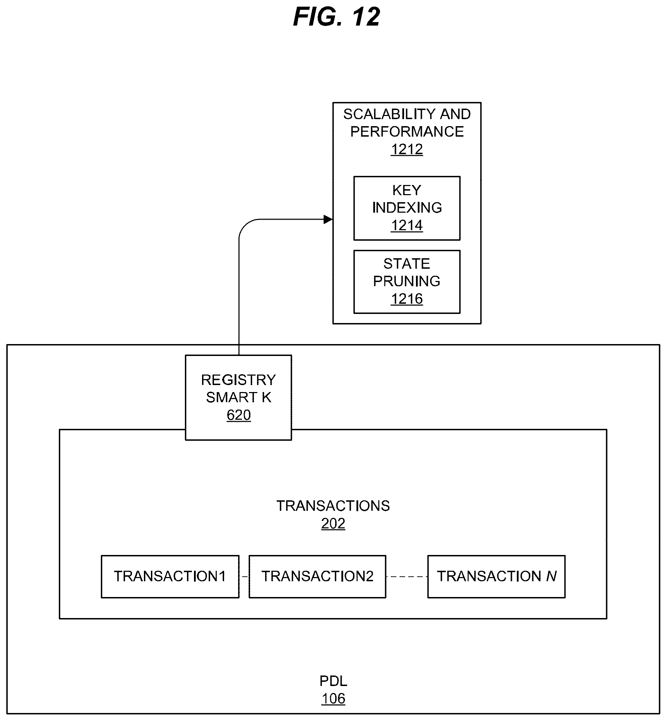

FIG. 12 is a block diagram illustrating maintenance operations regarding the registry smart contract 620 in an illustrative embodiment. To ensure scalability and enhance performance 1212, for example, data partitioning techniques may be implemented for the registry smart contract 620. For example, a key indexing mechanism 1214 may be employed to facilitate rapid and efficient data retrieval of the node information 810. Identifying node information 810 based on a smart contract name, contract version, node owner identifier, the node identifier, etc., may be time consuming. To minimize search time, the key indexing mechanism 1214 may be implemented. Depending on the value of the keys 1052, requests are directed to different peer nodes 104 to retrieve the node information 810, which distributes the load when multiple lookup requests arrive simultaneously. Each peer node 104 may manage a specific subset of keys 1052, dividing data storage and processing responsibilities across the distributed network 102. One technical benefit is key indexing helps reduce latency and improve the efficiency of the service. In addition, a state pruning mechanism 1216 may be implemented to remove obsolete or irrelevant data from the PDL 106, maintaining a compact representation. In distributed ledgers in general, data is recorded forever. This means old and stale node information 810 may be a clutter/unwanted information after some time. State pruning may be accomplished by periodically pruning old data distributed across multiple peer nodes 104 to help reduce ledger size. One technical benefit is the PDL 106 remains organized and optimized for efficient data access.

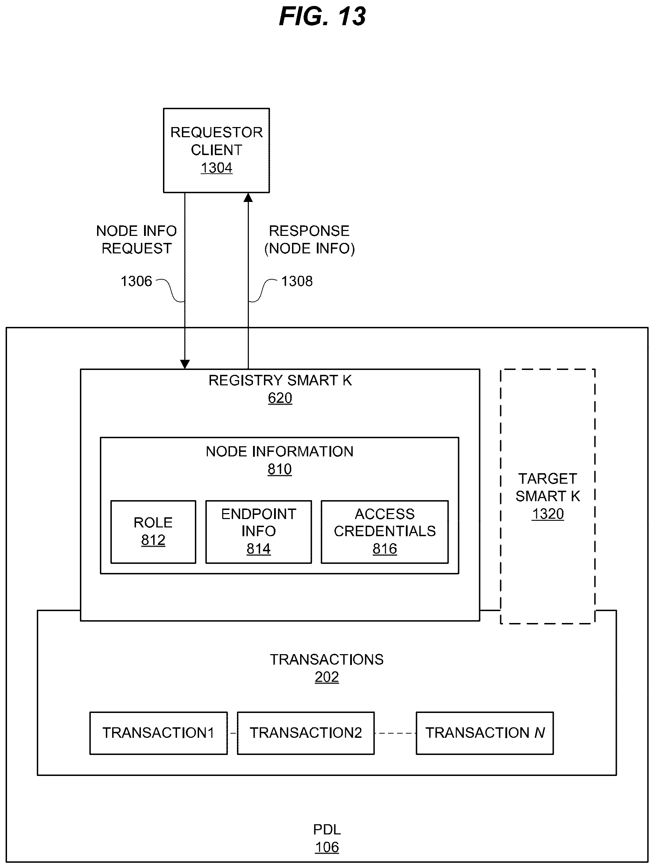

FIG. 13 is a block diagram illustrating querying of the registry smart contract 620 in an illustrative embodiment. The registry smart contract 620 may provide a node information retrieval function responsible for retrieving node information 810 (i.e., endpoint information 814 and/or access credentials 816) stored or recorded on the PDL 106. The node information retrieval function may also provide error handling mechanisms to manage potential issues during the query process. A requestor, for example, may query the registry smart contract 620 to obtain the most recent and accurate node information 810 about one or more peer nodes 104. For example, a requestor client 1304 may submit a node information request 1306 to the registry smart contract 620. The requestor client 1304 may comprise a device 404 that submits the node information request 1306 through an API 402 of the registry smart contract 620, may comprise a user 412 that submits the node information request 1306 through a dApp 408, etc. The node information request 1306 may include an identifier for one or more peer nodes 104, names or identifiers for one or more target smart contracts 1320, and/or other information to indicate what node information 810 is desired. As an example, to invoke a target smart contract 1320, a requestor client 1304 may query the registry smart contract 620 to obtain the most recent and accurate node information 810 about the relevant peer nodes 104 hosting the target smart contract 1320. For example, a dApp 408 may advertise the target smart contract 1320 as potentially available to the requestor client 1304, but the requestor client 1304 does not know how to access a peer node(s) 104 hosting the target smart contract 1320. Thus, the requestor client 1304 may submit the node information request 1306 to retrieve endpoint information 814 and/or other node information 810 for a peer node(s) 104. When a requestor client 1304 interacts with distributed network 102 using the API 402 or dApp 408, an identity context is established. The identity context represents the current client or user identity, and is used to sign transactions and authenticate client actions on the network. The API 402 or dApp 408 manages the identity context and ensures that it is properly set and maintained throughout the interaction with the PDL 106.

When in operation, the registry smart contract 620 executes (e.g., automatically) in response to receiving a node information request 1306 for one or more peer nodes 802 and/or one or more target smart contracts 1320. When the registry smart contract 620 executes, the registry smart contract 620 identifies a peer node(s) 104 and/or target smart contract(s) 1320 indicated in the node information request 1306. Before the node information 810 can be provided to the requestor, approval needs to be obtained, such as through validation module 622. According to the consensus algorithm 832, endorsement policy 834, etc., defined for the registry smart contract 620 or PDL 106, the registry smart contract 620 generates a transaction proposal 902 to read the node information 810 from the PDL 106 (see FIG. 9). The registry smart contract 620 sends or provides the transaction proposal 902 to a group 904 (e.g., one or more) of peer nodes 104 for approval (i.e., to achieve a consensus/endorsement). When receiving a transaction proposal 902 from the registry smart contract 620, the group 904 of peer nodes 104 verifies the validity of read request. For example, the group 904 of peer nodes 104 may verify that the requestor submitting the node information request 1306 has the necessary permissions to query the registry smart contract 620, to invoke the target smart contract 1320, etc. When the transaction proposal 902 is successfully validated, the group 904 of peer nodes 104 adds an endorsement signature to the transaction proposal 902, and provides an endorsed transaction proposal 906 to an ordering service 910. The ordering service 910 receives the endorsed transaction proposal 906, and delivers endorsed transaction proposal 906 to the committing peer nodes 104 in the network. Although an endorsement process 900 is described, other types of approval processes may be used to read from the PDL 106, such as based on the consensus algorithm 832.

The registry smart contract 620 receives the endorsed transaction proposal 906 from the ordering service 910, and validates the endorsed transaction proposal 906, ensuring that the endorsement policy is satisfied. The registry smart contract 620 then reads the node information 810 from the PDL 106. More particularly, the registry smart contract 620 queries one or more transactions 202 on the PDL 106 to acquire the node information 810. In an embodiment, the node information request 1306 may include a target smart contract ID 1020 that uniquely identifies a target smart contract 1320, and the registry smart contract 620 queries one or more transactions 202 on the PDL 106 to acquire the node information 810 (e.g., endpoint information 814) for one or more peer nodes 104 hosting the target smart contract 1320. As described above, a transaction(s) 202 on the PDL 106 may include mappings 1004 that map smart contract IDs 1020 to endpoint information 814, and the registry smart contract 620 may query the mappings 1004 to identify endpoint information 814 associated with peer nodes 104 that host the target smart contract 1320. The registry smart contract 620 then provides a node information response 1308 to the requestor client 1304 containing the node information 810, as approved in the endorsed transaction proposal 906. One technical benefit is the registry smart contract 620 is able to respond to queries for node information 810. Thus, when an outside entity wants to invoke a target smart contract 1320, for example, the registry smart contract 620 may be queried to obtain the accurate and valid endpoint information 814 for the peer node(s) 104 that host the target smart contract 1320.

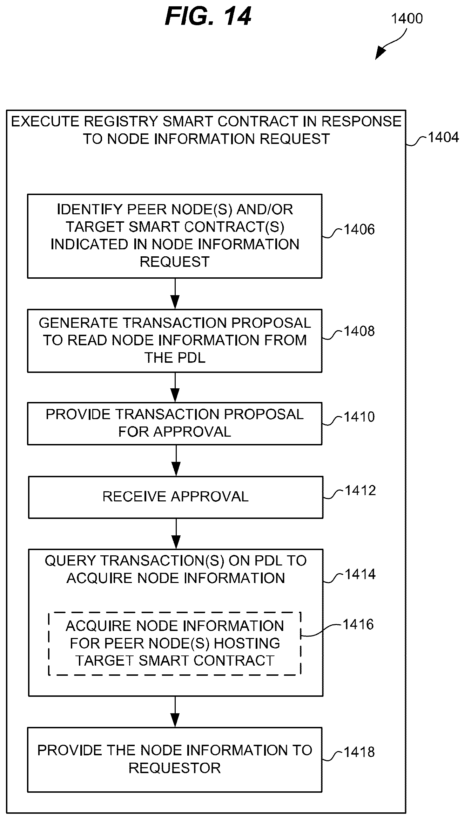

FIG. 14 is a flow chart illustrating a method 1400 of querying the registry smart contract 620 in an illustrative embodiment. The PDL platform 600 executes the registry smart contract 620 deployed on the PDL 106 in response to a trigger or trigging condition (step 1404). In this embodiment, the registry smart contract 620 executes (e.g., automatically) in response to receiving a node information request 1306 regarding one or more peer nodes 802 and/or one or more target smart contracts 1320 (see FIG. 13). When the registry smart contract 620 executes, the registry smart contract 620 identifies a peer node(s) 104 and/or target smart contract(s) 1320 indicated in the node information request 1306 (step 1406). The registry smart contract 620 generates a transaction proposal 902 to read node information 810 from the PDL 106 (step 1408). The registry smart contract 620 sends or provides the transaction proposal 902 to a group 904 (e.g., one or more) of peer nodes 104 for approval (step 1410).

The registry smart contract 620 receives approval for the transaction proposal 902 (step 1412), such as an endorsed transaction proposal 906 from the ordering service 910. When approval is granted, the registry smart contract 620 queries or reads one or more transactions 202 on the PDL 106 to acquire the node information 810 (step 1414). In an embodiment, the node information request 1306 may include a target smart contract ID 1020 that uniquely identifies a target smart contract 1320, and the registry smart contract 620 queries one or more transactions 202 on the PDL 106 to acquire the node information 810 (e.g., endpoint information 814) for one or more peer nodes 104 hosting the target smart contract 1320 (optional step 1416). The registry smart contract 620 sends a node information response 1308 to the requestor client 1304 with the node information 810 (step 1418). More particularly, the node information response 1308 may contain endpoint information 814 and/or access credentials 816 for the peer node(s) 104 hosting the target smart contract 1320. One technical benefit is a requestor client 1304 may access the target smart contract 1320 through a peer node 104 based on the node information 810 (e.g., endpoint information 814) provided by the registry smart contract 620.

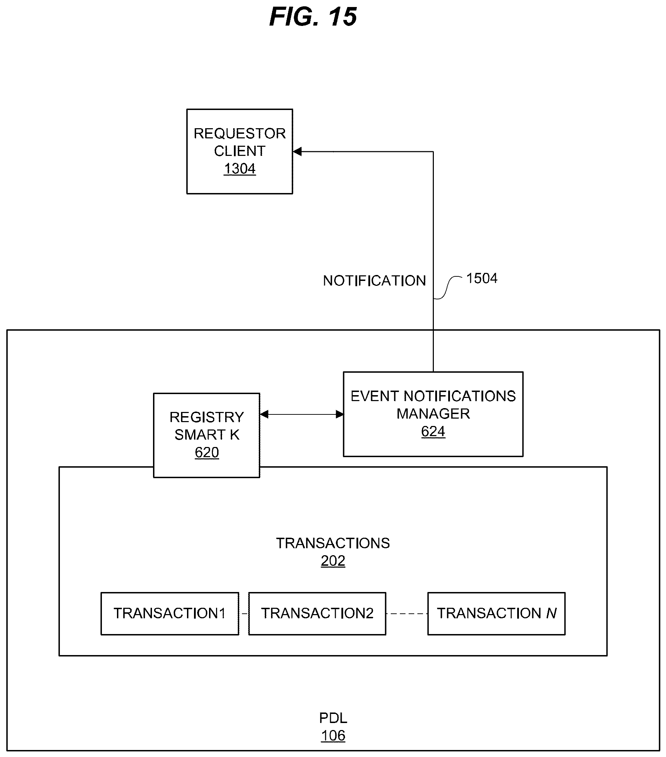

FIG. 15 is a block diagram illustrating events notification in an illustrative embodiment. The event notifications manager 624 (see FIG. 6) may provide a notification function that manages event notifications 1504 to inform interested parties about changes to node information 810. For example, a requestor client 1304 may subscribe to be notified of changes to node information 810 for specific peer nodes 104, for the target smart contract 1320 (or other smart contracts 220), etc.

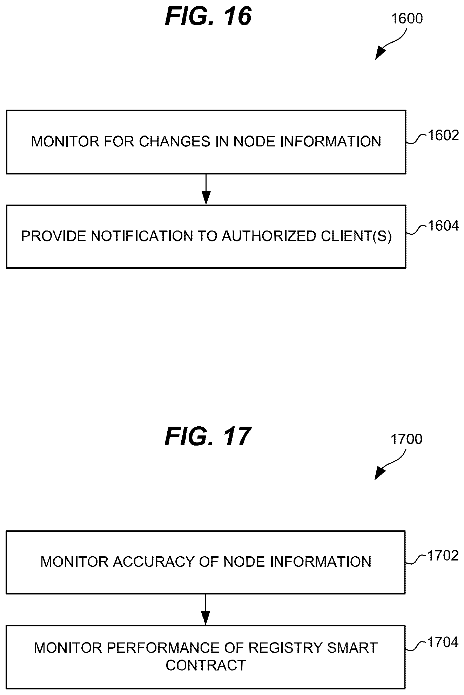

FIG. 16 is a flow chart illustrating a method 1600 of providing event notifications in an illustrative embodiment. The event notifications manager 624 monitors for changes in node information 810 on the PDL 106 (step 1602). For example, the event notifications manager 624 may monitor for the addition, modification, and/or removal of node information 810 (e.g., endpoint information 814). When a change is detected, the event notifications manager 624 provides an event notification 1504 to one or more authorized clients (step 1604). One technical benefit is interested parties may be informed of changes to node information 810.

FIG. 17 is a flow chart illustrating a method 1700 of auditing the node information 810 in an illustrative embodiment. The audit manager 626 (see FIG. 6) may provide an audit function that audits the registration and update process of node information 810 in the PDL 106. The audit manager 626 may comprise a group of peer nodes 104 that monitor the accuracy of the node information 810 recorded in the PDL 106 (step 1702). This includes verifying that the node information 810 is valid and up-to-date. The audit manager 626 may further monitor the performance of the registry smart contract 620 (step 1704). For example, the audit manager 626 may monitor the latency, throughput, and/or resource utilization of the registry smart contract 620 in registering or updating node information 810, in responding to queries, etc. The audit manager 626 may also evaluate the effectiveness of data partitioning or the key indexing mechanism 1214, the state pruning mechanism 1216, etc. One technical benefit is the effectiveness of the registry smart contract 620 can be monitored and verified.

Any of the various elements or modules shown in the figures or described herein may be implemented as hardware, software, firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, an element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

As used in this application, the term "circuitry" may refer to one or more or all of the following:
(a) hardware-only circuit implementations (such as implementations in only analog and/or digital circuitry);
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although specific embodiments were described herein, the scope of the disclosure is not limited to those specific embodiments. The scope of the disclosure is defined by the following claims and any equivalents thereof.

## Claims

1. An apparatus, comprising:
at least one processor; and
at least one memory storing instructions, that when executed by the at least one processor, cause the apparatus at least to perform:
operating a permissioned distributed ledger on a distributed network of peer nodes; and
executing at least one registry smart contract deployed on the permissioned distributed ledger, in response to receiving a register request regarding a registering peer node, to perform:
identifying node information comprising at least endpoint information of the registering peer node;
generating a first transaction proposal to record the node information of the registering peer node on the permissioned distributed ledger;
providing the first transaction proposal to a group of the peer nodes for approval; and
recording the node information of the registering peer node as a transaction on the permissioned distributed ledger when approval is granted.

2. The apparatus of claim 1, wherein:
the node information comprises a mapping of the endpoint information to at least one smart contract deployed on the permissioned distributed ledger; and
the node information further comprises an indication of a role of the registering peer node.

3. The apparatus of claim 1, wherein:
the node information further comprises access credentials for accessing the registering peer node.

4. The apparatus of claim 1, wherein the instructions when executed by the at least one processor, cause the apparatus at least to perform:
executing the at least one registry smart contract, in response to receiving a node information request from a requestor, to perform:
identifying a target smart contract indicated in the node information request;
generating a second transaction proposal to read the node information from the permissioned distributed ledger regarding at least one of the peer nodes hosting the target smart contract;
providing the second transaction proposal to the group of the peer nodes for approval;
querying the permissioned distributed ledger to identify the node information when approval is granted, wherein the node information comprising at least the endpoint information regarding the at least one of the peer nodes hosting the target smart contract; and
providing the node information to the requestor.

5. The apparatus of claim 4, wherein the querying comprises:
querying the permissioned distributed ledger to identify access credentials for accessing the at least one of the peer nodes hosting the target smart contract; and
querying the permissioned distributed ledger to identify a mapping between the target smart contract and the endpoint information for the at least one of the peer nodes hosting the target smart contract.

6. The apparatus of claim 1, wherein the instructions when executed by the at least one processor, cause the apparatus at least to perform:
monitoring for changes in the endpoint information recorded in the permissioned distributed ledger; and
providing an event notification to at least one client in response to the changes.

7. A method comprising:
operating a permissioned distributed ledger on a distributed network of peer nodes; and
executing at least one registry smart contract deployed on the permissioned distributed ledger, in response to receiving a register request regarding a registering peer node, to perform:
identifying node information comprising at least endpoint information of the registering peer node;
generating a first transaction proposal to record the node information of the registering peer node on the permissioned distributed ledger;
providing the first transaction proposal to a group of the peer nodes for approval; and
recording the node information of the registering peer node as a transaction on the permissioned distributed ledger when approval is granted.

8. The method of claim 7, wherein:
the endpoint information comprises at least a network address of the registering peer node.

9. The method of any of claims 7 to 8, wherein:
the node information comprises a mapping of the endpoint information to at least one smart contract deployed on the permissioned distributed ledger; and
the node information further comprises an indication of a role of the registering peer node.

10. The method of claim 7, wherein:
the node information further comprises access credentials for accessing the registering peer node.

11. The method of claim 7, further comprising:
executing the at least one registry smart contract, in response to receiving a node information request from a requestor, to perform:
identifying a target smart contract indicated in the node information request;
generating a second transaction proposal to read the node information from the permissioned distributed ledger regarding at least one of the peer nodes hosting the target smart contract;
providing the second transaction proposal to the group of the peer nodes for approval;
querying the permissioned distributed ledger to identify the node information when approval is granted, wherein the node information comprising at least the endpoint information regarding the at least one of the peer nodes hosting the target smart contract; and
providing the node information to the requestor.

12. The method of claim 11, wherein the querying comprises:
querying the permissioned distributed ledger to identify access credentials for accessing the at least one of the peer nodes hosting the target smart contract; and
querying the permissioned distributed ledger to identify a mapping between the target smart contract and the endpoint information for the at least one of the peer nodes hosting the target smart contract.

13. The method of claim 7, further comprising:
monitoring for changes in the endpoint information recorded in the permissioned distributed ledger; and
providing an event notification to at least one client in response to the changes.

14. A non-transitory computer readable medium comprising programmed instructions that, when executed by an apparatus, cause the apparatus at least to:
operate a permissioned distributed ledger on a distributed network of peer nodes; and
execute at least one registry smart contract deployed on the permissioned distributed ledger, in response to receiving a register request regarding a registering peer node, to perform:
identifying node information comprising at least endpoint information of the registering peer node;
generating a first transaction proposal to record the node information of the registering peer node on the permissioned distributed ledger;
providing the first transaction proposal to a group of the peer nodes for approval; and
recording the node information of the registering peer node as a transaction on the permissioned distributed ledger when approval is granted.

15. The computer readable medium of claim 14, wherein the programmed instructions when executed by the apparatus, cause the apparatus at least to:
execute the at least one registry smart contract, in response to receiving a node information request from a requestor, to perform:
identifying a target smart contract indicated in the node information request;
generating a second transaction proposal to read the node information from the permissioned distributed ledger regarding at least one of the peer nodes hosting the target smart contract;
providing the second transaction proposal to the group of the peer nodes for approval;
querying the permissioned distributed ledger to identify the node information when approval is granted, wherein the node information comprising at least the endpoint information regarding the at least one of the peer nodes hosting the target smart contract; and
providing the node information to the requestor.
